Europäisches Patentamt

European Patent Office

Office européen des brevets

(11) Veröffentlichungsnummer: **0 346 757**
**A2**

# (12) EUROPÄISCHE PATENTANMELDUNG

(21) Anmeldenummer: **89110334.3**

(22) Anmeldetag: **08.06.89**

(51) Int. Cl.⁴: **B29C 47/40 , B29C 47/64**

(30) Priorität: **15.06.88 DE 3820320**

(43) Veröffentlichungstag der Anmeldung:
**20.12.89 Patentblatt 89/51**

(84) Benannte Vertragsstaaten:
**ES FR GB IT NL SE**

(71) Anmelder: **Krauss-Maffei Aktiengesellschaft**
**Krauss-Maffei-Strasse 2**
**D-8000 München 50(DE)**

(72) Erfinder: **Baumgärtner, Siegfried**
**Im Wismat 47**
**D-8000 München 60(DE)**

(54) **Doppelschneckenextruder.**

(57) Ein Doppelschneckenextruder ist auslaßseitig mit einer Homogenisierstrecke versehen, die mit den Extruderschnecken drehfest verbundene und dadurch gegensinnig angetriebene Zellenrotoren aufweist, die die von den Extruderschnecken axial vorgeschobene Schmelze in Umfangsrichtung bewegen und verteilen. Dadurch wird die aus dem Überlappungsbereich der Extruderschnecken stammende, stärker erhitzte und plastifizierte Schmelze mit der übrigen Schmelze innig vermischt und homogenisiert, so daß dem Formwerkzeug eine homogene Schmelze, frei von örtlichen Temperatur-und Viskoseunterschieden, zugeführt wird.

Fig.1

# Doppelschneckenextruder

Doppelschneckenextruder sind kontinuierlich arbeitende Schneckenpressen mit zwei ineinander kämmenden Schnecken und dienen zum Plastifizieren und Extrudieren von Kunststoffen. Vorzugsweise werden Doppelschneckenextruder zur kontinuierlichen Verarbeitung von PVC-Pulverrezepturen eingesetzt.

Man unterscheidet in einem Doppelschneckenextruder verschiedene, vom Einlaß zum Auslaß aufeinanderfolgende Zonen, insb. eine Aufschmelzzone, Mischzone, Entgasungszone und Austragszone. In der Regel haben die Schnecken über ihre Länge eine unterschiedliche, an die jeweilige Zone angepaßte Formgebung. So können die Schneckengänge in den Zonen unterschiedliche Steigungen und Abstände haben und mit Unterbrechungen, Schikanen u.dgl. versehen sein. Auch können insb. in der Aufschmelzzone und/oder der Mischzone die Schneckengänge ersetzt sein durch ineinandergreifende Zahnscheiben oder Knetblöcke, um eine besonders intensive Durchmischung des Pulvers in der Schmelze und eine Homogenisierung der Schmelze zu erreichen. In der Austragszone haben die Schnecken dagegen in der Regel durchgehende Schneckengänge, die mit einem geringen Walzen- und Flanken spiel miteinander kämmen, damit ein Rückströmen der Schmelze verhindert und der erforderliche Druck zum Einpressen der Schmelze in ein an den Extruder angeschlossenes Formwerkzeug erzeugt wird.

Doppelschneckenextruder aller Bauarten, sei es mit zylindrischen, konischen oder doppelkonischen Schnecken, haben folgendes Problem gemeinsam: In dem zwickel- bzw. linsenförmigen Überlappungsbereich der Schnecken, wo die Schneckengänge mit geringem Walzen- und Flankenspiel miteinander kämmen, wird die Schmelze einer sehr hohen Scherung ausgesetzt, so daß sie in diesem Bereich stärker plastifiziert wird bzw. eine höhere Temperatur und eine niedrigere Viskosität hat als in den übrigen Querschnittsbereichen des Extruders. Auch wird das Material in diesem Überlappungsbereich stärker vorwärtsgetrieben. In ein an den Extruderauslaß angeschlossenes Werkzeug tritt deshalb das Material aus dem Überlappungsbereich mit höherer Temperatur, kleinerer Viskosität und größerem Vortrieb ein als aus den übrigen Querschnittsbereichen. Dies führt zwangsläufig zu Qualitätseinbußen an den zu extrudierenden Produkten. So ist es bekannt, daß dieses Problem bei PVC-Rohren zu Schwankungen der Wanddicke bzw. zu Wellungen an der Rohrinnenseite führt. Bei PVC-Platten beobachtet man unerwünschte Schlieren, Dickenunterschiede, Fließmarkierungen usw.. PVC-Folien können aus den genannten Gründen mit Doppelschneckenextrudern in der Regel nicht hergestellt werden. Man benötigt Planetenwalzenextruder, deren Kosten ein Mehrfaches der von Doppelschneckenextrudern betragen. Beim Extrudieren von PVC-Profilen wird der Extruder häufig mit nur 50% seiner Maximalleistung betrieben, da bei geringerer Drehzahl die beschriebene Inhomogenität der Schmelze weniger ausgeprägt ist.

Man hat versucht, das beschriebene Problem durch besondere Anpassung oder Korrektur des an den Extruder angeschlossenen Formwerkzeugs zu lösen, insb. derart, daß die heißere Schmelze aus dem Überlappungsbereich in möglichst verschiedene Querschnittsbereiche der Form verteilt wird. Auch hat man an der Form zusätzliche Heizvorrichtungen angebracht, um durch eine Nachheizung eine gleichmäßigere Temperaturverteilung der Schmelze zu erreichen. Alle diese werkzeugseitigen Maßnahmen sind unbefriedigend.

Der Erfindung liegt die Aufgabe zugrunde, einen Doppelschneckenextruder von der im Oberbegriff des Anspruchs 1 angegebenen Art so auszugestalten, daß er die Schmelze mit einer im gesamten Querschnittsbereich weitgehend gleichmäßigen Temperatur und Viskosität an ein angeschlossenes Werkzeug abgibt.

Die erfindungsgemäße Lösung der Aufgabe ist im Anspruch 1 angegeben. Die Unteransprüche betreffen vorteilhafte weitere Ausgestaltungen der Erfindung.

Bei der erfindungsgemäßen Lösung ist zwischen der Austragszone des Extruders und dem Werkzeug eine Homogenisierstrecke angeordnet, bei der es sich um eine Zusatzeinrichtung handeln kann, die zwischen Extruder und Werkzeug eingefügt wird, oder aber um einen integralen Teil des Extruders selbst. Die Wirkung der Homogenisierstrecke besteht darin, daß das von der Austragszone des Extruders abgegebene Material durch die Zellenrotoren in Umfangsrichtung bewegt wird, und zwar mit wesentlich größerer Geschwindigkeit als der von den Förderschnecken erzeugte Axialvorschub beträgt. Hierdurch wird insbesondere das aus dem Überlappungsbereich der Schnecken stammende Material in Umfangsrichtung über den gesamten Querschnitt verteilt und vermischt sich mit dem aus dem übrigen Querschnittsbereich der Schnecken stammenden, kühleren Material. Die Anströmkanten der Zellenwände der Rotoren wirken dabei als Schneidkanten, die von dem von den Schnecken vorwärtsgeschobenen Materialpropfen gewissermaßen immer wieder dünne Schichten abschneiden und in Umfangsrichtung gegeneinander versetzen. Das am Austritt der Homogenisierstrek-

ke ankommende Material besteht deshalb in jedem Querschnittsbereich aus zahlreichen in Axialrichtung hineinanderliegenden dünnen Materialschichten, die abwechselnd aus dem Überlappungsbereich der Schnecken und aus den übrigen Querschnittsbereichen stammen. Die am Ende der Austragszone der Schnecken vorhandenen Inhomogenitäten sind deshalb am Austritt der Homogenisierstrecke in hohem Maße vergleichmäßigt worden. Wichtig ist dabei, daß das Material in der Homogenisierstrecke keinen erneuten Scher- und Knetbeanspruchungen unterworfen wird, die ihrerseits zu einer örtlich inhomogenen Erhitzung und Plastifizierung führen können. Die Zellenrotoren sind deshalb im Querschnitt so gestaltet, daß ihre Förderzellen und Zellenwände berührungsfrei und mit beträchtlichem Spiel miteinander kämmen.

Die Zellenwände der Rotoren können achsparallel oder im Winkel zur Achsrichtung, also schraubenförmig verlaufen. Im letzteren Fall üben die Zellenwände eine zusätzliche Schubwirkung in Achsrichtung auf das Material aus, die je nach der Steigungsrichtung der Zellenwände der Förderwirkung der Schnecken gleichgerichtet oder entgegengerichtet, also bremsend sein kann. Vorzugsweise haben die Zellenwände die gleiche Steigungsrichtung wie die Schneckengänge, aber einen wesentlich größeren Steigungswinkel von vorzugsweise 50-80°. Sie üben somit eine Förderwirkung auf das Material aus, die wesentlich kleiner ist als der von den Schneckengängen erzeugte Förderdruck, aber ausreicht, um z.B. bei Beendigung eines Extrusionsvorgangs, wenn die Schneckengänge bereits kein Material mehr enthalten, das restliche Material aus der Homogenisierzone herauszufördern.

Zur Verstärkung der Misch- und Homogenisierwirkung weisen die Zellenwände über ihre axiale Länge vorzugsweise eine oder mehrere Unterbrechungen auf. Die axiale Länge dieser Unterbrechungen ist vorzugsweise kleiner, z.B. nur 1/4, der Länge der an sie angrenzenden Abschnitte der Zellenwände. Die Unterbrechungen können in der gleichen Radialebene nebeneinanderliegen, so daß von Zellenwänden freie Ringräume gebildet werden. Die Unterbrechungen können aber auch gegeneinander in Achsrichtung versetzt sein. In diesem Fall können die Längsmitten der Unterbrechungen vorzugsweise auf Schraubenlinien liegen, deren Steigungsrichtung gleich oder entgegengesetzt zu der Steigungsrichtung der Zellenwände verlaufen kann. Auf diese Weise findet ein ständiger Übertritt von Material zwischen benachbarten Zellen jedes Zellenrotors statt unter gleichzeitiger Axialverschiebung des übertretenden Materials.

Eine Ausführungsform der Erfindung wird anhand der Zeichnungen näher erläutert. Es zeigt :

Fig. 1 einen Längsschnitt in Draufsicht durch das Austragsende eines Doppelschneckenextruders mit Homogenisierstrecke gemäß einer Ausführungsform der Erfindung.

Fig. 2 einen Schnitt nach der Linie II-II von Fig.1;

Fig. 3 und 4 Schnitte nach der Linie III-III von Fig. 1 in geänderter Ausführungsform.

Fig. 5 und 6 Längs- und Querschnitt entsprechend Fig. 1 und 2 gemäß einer anderen Ausführungsform der Erfindung.

Fig. 7 einen Längsschnitt gemäß Fig. 1 durch eine weitere Ausführungsform der Erfindung.

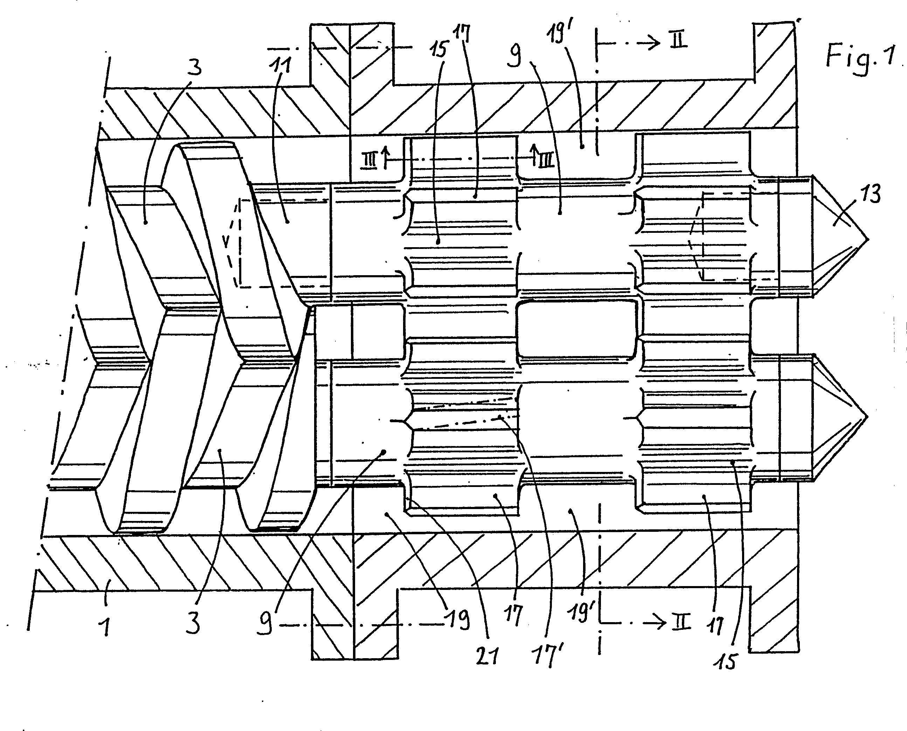

Gemäß Fig. 1 hat der Doppelschneckenextruder ein Zylindergehäuse 1, dessen Innenraum, wie bekannt, die Form von zwei sich schneidenden Zylindern, d.h. die Querschnittsform einer liegenden 8 aufweist. In dem Gehäuseinnenraum sind zwei Extruderschnecken 3 angeordnet, deren Schneckengänge und Schneckenstege in der dargestellten Austragszone kämmend und aneinanderabwälzend ineinandergreifen, so daß das in den Schneckengängen befindliche Gut in Axialrichtung vorwärtsgeschoben wird und der für das Extrudieren erforderliche Druck erzeugt wird. Durch das Ineinandergreifen der Schnecken ergibt sich im wesentlichen eine volumetrische Förderung, weshalb die Austragszone auch als Meteringzone bezeichnet wird. Links von der in Fig. 1 gezeigten Austragszone schließen sich weitere Zonen des Doppelschneckenextruders an, in denen die Schnecken andere Schneckenprofile, oder abschnittsweise auch Zahnscheiben, Knetelemente od.dgl. tragen können.

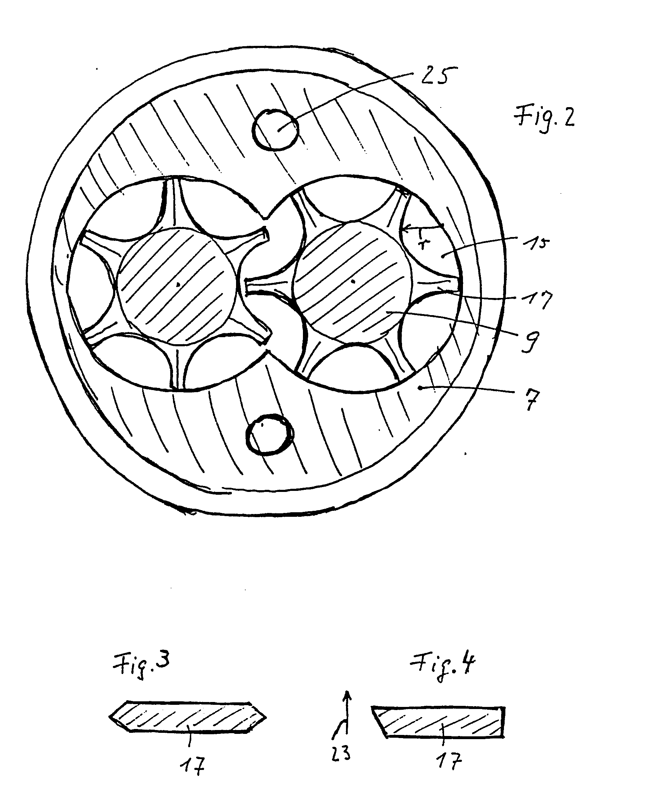

An das Austrittsende des Extruders ist das Gehäuse 7 der Homogenisierstrecke angesetzt, z.B. mittels der angedeuteten Flanschverschraubung. Das Gehäuse 7 hat vorzugsweise die gleichen Außen- und Innenabmessungen wie das Extrudergehäuse 1. In dem Gehäuse 7 sind, vergleiche auch Fig. 2, zwei Zellenrotoren 9 gelagert, die mit den Extruderschnecken 3 drehfest verbunden werden können. Vorzugsweise hat jeder Zellenrotor zu diesem Zweck einen Gewindefortsatz 11, der in eine Gewindeausnehmung am vorderen Ende der Schnecke 3 paßt, in welcher üblicherweise der Austragskonus befestigt ist. Der Zellenradrotor 9 wird dann anstelle des Austragskonus am Ende der Extruderschnecke 3 befestigt, während der Austragskonus 13 am Ende des Rotors 9 in gleicher Weise befestigt werden kann. Die Zellenrotoren laufen somit gemeinsam mit den Schnecken 3 in zu einander gegensinniger Drehung um.

Jeder Rotor ist an seinem Umfang mit Förderzellen 15 versehen, die durch achsparallele Zellenwände 17 voneinander getrennt sind. Die Zellenwände laufen mit geringem Spalt an der Innenfläche des Zylindergehäuses entlang. Der Außendurchmesser der Zellenrotoren 9 ist vorzugsweise im wesentlichen der gleiche wie der der Förderschnecken 3. Die Zahl der über den Umfang jedes Rotors 9 verteilten Förderzellen 15 kann vorzugsweise 5, 6 oder 7 betragen. Die Förderzellen haben vorzugsweise, wie in Fig. 2 dargestellt, eine kreisbogenförmige Querschnittskontur, wobei der Bogenradius bei der dargestellten Ausführungsform mit sechs Förderzellen vorzugsweise ca. das 0,22-fache des Außendurchmessers DA beträgt. Jeweils einer Förderzelle des einen Rotors steht eine Zellenwand des anderen Rotors gegenüber, so daß die Rotoren berührungsfrei und mit großem Spiel kämmend ineinandergreifen.

Die Zellenwände 17 und die zwischen ihnen gebildeten Förderzellen 15 können sich über die gesamte Länge jedes Rotors 9 erstrecken oder, wie dargestellt, nur über zwei oder mehr axiale Abschnitte jedes Rotors. Den Förderzellen, oder jedem Abschnitt der Förderzellen, ist jeweils ein freier Ringraum 19 vorgelagert. Dieser Ringraum wird jeweils von der Schmelze ausgefüllt, wobei die Schmelze durch die Förderwirkung der Schnecken 3 in Axialrichtung vorwärtsgeschoben wird, im wesentlichen ohne Bewegung in Umfangsrichtung. Sobald die Schmelze die Anströmkante 21 der Zellenwände 17 erreicht und in die entsprechenden Förderzellen 15 eintritt, wird sie in Umfangsrichtung mitgenommen, wobei die mittlere Umfangsgeschwindigkeit typischerweise mindestens ca. das 10-fache des von den Schnecken 3 erzeugten, im Ringraum 19 wirksamen Axialvorschubs betragen wird. Von der im Ringraum 19 vorrückenden Masse werden somit durch die Anströmkanten 21 der Zellenwände 17 immer wieder dünne Materialschichten von typischerweise weniger als 5 mm Dicke abgeschnitten und in Umfangsrichtung versetzt. Auf diese Weise werden dünne Materialschichten in Axialrichtung hintereinander gelagert, die aus verschiedenen Querschnittsbereichen des Extruders 1 stammen. Hierdurch werden die aus dem Überlappungsbereich der Schnecken 3 stammenden, stärker erhitzten und plastifizierten Materialanteile mit den kälteren Materialanteilen aus den übrigen Bereichen gleichmäßig verteilt und vermischt. Dieser Vorgang wiederholt sich entsprechend der Zahl der axialen Abschnitte von Förderzellen 15 und Zellenwänden 17, denen jeweils ein strömungsberuhigender Ringraum 19 bzw. 19' vorgelagert ist.

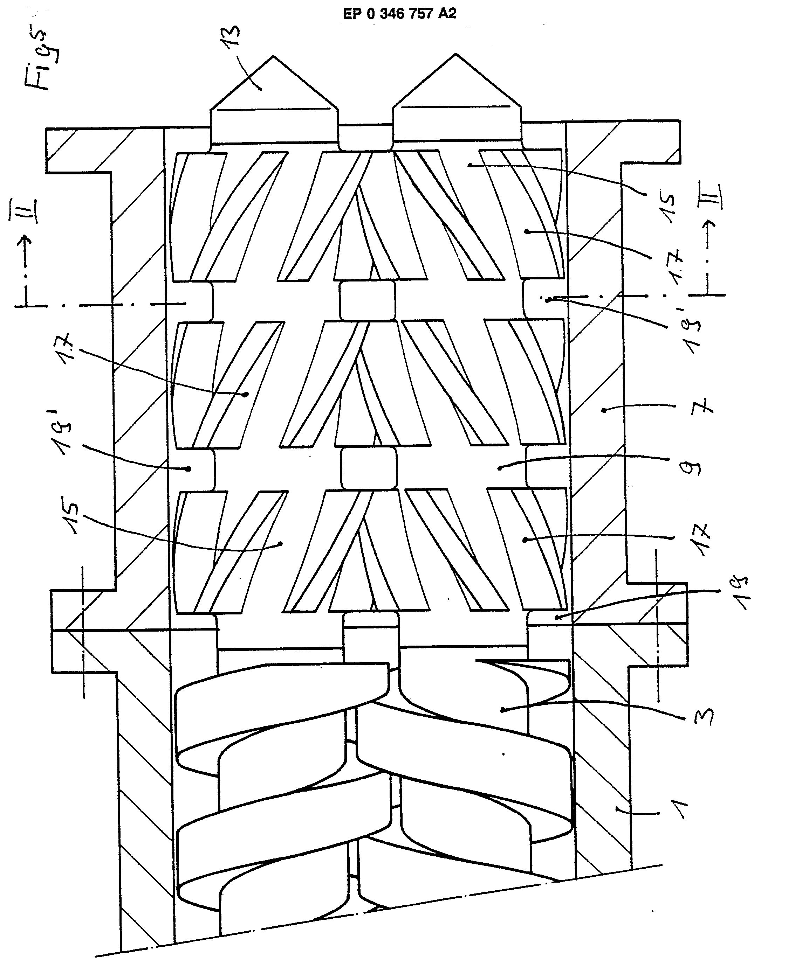

Mindestens die Anströmkanten 21 der Zellenwände 17 sind derart gestaltet, daß Produktanbackungen vermieden werden. Bei der dargestellten Ausführungsform ist der Übergang der Anströmkanten in dem Rotorkern abgerundet, und jede Anströmkante ist pfeilförmig zugespitzt. Die austrittsseitige Stirnfläche jeder Zellenwand verläuft in einer achssenkrechten Ebene, geht aber ebenfalls gerundet in den Rotorkern über. Selbstverständlich sind auch andere Gestaltungen der An- und Abströmkanten der Zellenwände möglich. Z.B. zeigt Fig. 3 eine Ausführungsform bei der sowohl die Anström- als auch die Abströmkanten pfeilförmig zugespitzt sind. Fig. 4 zeigt eine Ausführungsform, bei der die Anströmkante nur nach einer Seite hin abgeschrägt ist, so daß eine zur Drehrichtung (Pfeil 23) hinweisende Schneidkante gebildet wird. Hierdurch wird eine besonders gute Abschälung der dünnen Materialschichten aus dem Materialpropfen im Ringraum 19 erzielt.

Wenn mit $D_A$ der Außendurchmesser der Schnecken 3 und auch der Rotoren 9 bezeichnet wird, so beträgt die axiale Länge der Förderzellen 15 bzw. Zellenwände 17 vorzugsweise 0,2 bis 0,4 $D_A$, und ebenso beträgt die axiale Länge jedes Ringraums 19 bzw. 19' ebenfalls vorzugsweise 0,2 bis 0,4 $D_A$. Es können nicht nur, wie dargestellt, zwei Abschnitte von Förderzellen 15, sondern auch drei, vier oder mehr Abschnitte mit jeweils dazwischenliegenden Ringräumen 19' aufeinanderfolgen. Der Spalt zwischen der Kopfbahn jeder Zellenwand 17 und der Innenfläche des Gehäuses 7 beträgt vorzugsweise zwischen 0,3 und 0,6 mm.

Die Zellenwände 17 und die von ihnen gebildeten Förder zellen 15 brauchen nicht exakt achsparallel zu verlaufen. Es ist zur Erzielung bestimmter Effekte möglich, sie auch mit einem kleinen Winkel von maximal ca. 10° zur Achsrichtung anzuordnen, wie dies in Fig. 1 bei 17' strichpunktiert angedeutet ist. Die Schrägstellung der Zellenwände 17 bei dieser Ausführungsform ist aber auf jeden Fall so klein, daß kein nennenswerter Axialvorschub im Bereich der Homogenisierstrecke erzeugt wird. Das Gehäuse 7 kann mit Kanälen 25 zum Durchleiten eines Heiz- oder Kühlmediums versehen sein, um die Gehäuseinnenfläche zu beheizen oder zu kühlen.

Anstatt, wie dargestellt, die Homogenisierstrecke als Zusatzeinheit auszubilden, die an das Ende des Extrudergehäuses 1 angesetzt wird, kann die Homogenisierstrecke auch integraler Teil des Extruders selbst sein, indem der letzte Abschnitt der Förderschnecken 3 in Form der Zellenrotoren 9 ausgestaltet wird.

An das in Fig. 1 rechte Ende der Homogenisierstrecke kann das mit der Schmelze zu beschickende Extrudierwerkzeug unmittelbar angeschlossen werden, wobei es sich um ein Werkzeug zum Extrudieren von Rohren, Platten, Folien oder Profilen handeln kann. Diesem Werkzeug wird die Schmelze aus der Homogenisierstrecke in einem völlig homogenisierten Zustand, ohne örtliche Temperatur- und Viskositätsunterschiede, zugeführt.

Während die beschriebene Ausführungsform einen Doppelschneckenextruder mit parallelachsigen, zylindrischen Extruderschnecken betrifft, ist die Erfindung auch bei Extrudern mit konischen bzw. doppelkonischen Schnecken anwendbar. In diesem Fall sind auch die Zellenrotoren 9 in Fortsetzung der Extruderschnecken mit entsprechender Konizität auszubilden und mit zueinander konvergierenden Achsen anzuordnen.

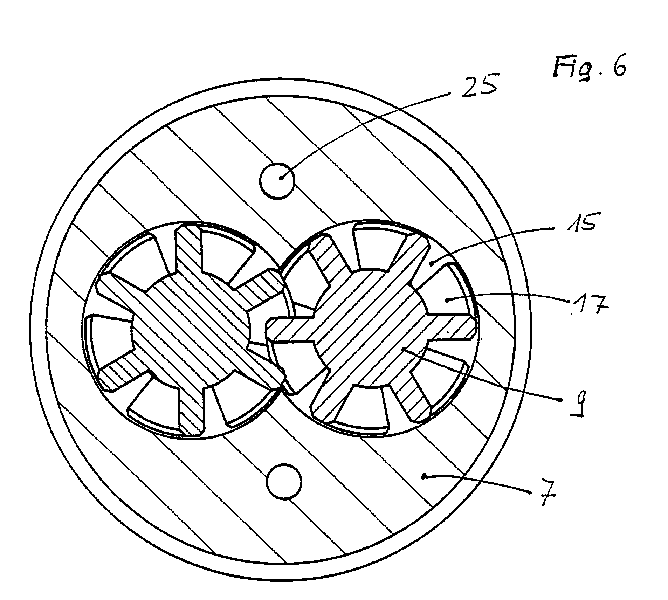

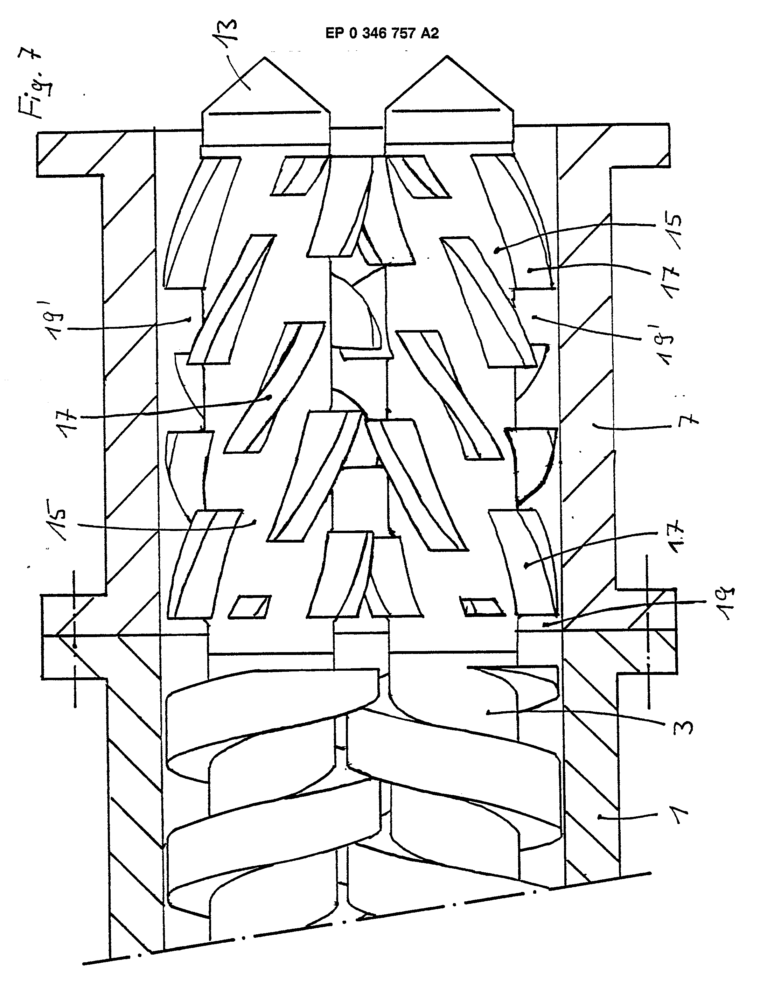

In einer weiteren Ausführungsform der vorliegenden Erfindung gemäß Fig. 5 und 6 soll der Axialvorschub der Schmelze im Bereich der Homogenisierstrecke unterstützt werden. Dazu sind in dem Gehäuse der Homogenisierstrecke zwei Zellenrotoren 9 angeordnet, die an ihrem Umfang jeweils mit Förderzellen 15 versehen sind, welche durch schraubenförmig verlaufende Zellenwände 17 voneinander getrennt sind. Die Zellenwände 17 sind in einem Winkel zwischen 10 und 50° zur Achsrichtung angeordnet. Die An- und Abströmkanten der Zellenwände 17 sind mit einem Winkel zwischen 40 und 80° ausgebildet.

Die axiale Länge der Förderzellen 15 bzw. Zellenwände 17 bleibt mit vorzugsweise 0,2 bis 0,4 $D_A$ gleich der in Fig. 1 und 2 dargestellten Ausführungsform. Die axiale Länge des Ringraumes 19 beträgt aber in der Ausführungsform gemäß Fig. 5 und 6 vorzugsweise 0,2 bis 0,3 $D_A$. Die axiale Länge der Ringräume 19' beträgt 0,1 bis 0,2 $D_A$. Selbstverständlich können auch in dieser Ausführungsform mehr als die dargestellten drei Abschnitte von Förderzellen 15 mit dazwischenliegenden Ringräumen 19' aufeinanderfolgen. Der Spalt zwischen der kopfbahn jeder Zellenwand 17 und der Innenfläche des Gehäuses 7 beträgt vorzugsweise zwischen 0,1 und 0,6 mm.

Alle weiteren Merkmale stimmen mit denen im Zusammenhang mit der in Fig. 1 und 2 beschriebenen Ausführungsform der Zellenrotoren 9 überein.

Eine weitere Ausführungsform gemäß Fig. 7 unterscheidet sich von der nach Fig. 5 dadurch, daß die Unterbrechungen 19' der schraubenförmig verlaufenden Zellenwände 17 der Zellenrotoren 9 so angeordnet sind, daß sie nicht nebeneinander liegen und Ringräume bilden, sondern in Achsrichtung gegeneinander versetzt sind derart, daß sie ihrerseits auf Schraubenlinien liegen. Deren Steigung ist vorzugsweise entgegengesetzt zu der der Zellenwände 17, so daß ein Teil der durch die Förderzellen 15 fließenden Schmelze quer vermischt wird.

Der Steigungswinkel von den Unterbrechungen 19' gebildeten Schraubenlinien kann z.B. gleich dem Winkel sein, den die Zellenwände 17 zur Achsrichtung einnehmen, und beträgt je nach verfahrenstechnischer Anforderung zwischen 10 und 15°. Die Länge der förderaktiven Zellenwände 17 beträgt in der in Fig. 7 angegebenen Ausführungsform vorzugsweise das drei- bis vierfache der axialen Länge der jeweiligen Unterbrechungen 19'. In allen weiteren Merkmalen stimmt diese Ausführungsform mit den in Fig. 5 und 6 beschriebenen Ausführungsformen überein.

## Ansprüche

1. Doppelschneckenextruder mit einem Extrudergehäuse mit doppelzylinderförmigem Innenquerschnitt und zwei im Gehäuse angeordneten, gegensinnig antreibbaren Extruderschnecken, deren Schneckengänge und Schneckenstege miteinander kämmen und die das Extrusionsgut unter Erhitzung und Plastifizierung zum Extruderauslaß bzw. zu einem daran anschließenden Formwerkzeug fördern, dadurch **gekennzeichnet,** daß in Verlängerung der Extruderschnecken (3) vor dem Extruderauslaß oder zwischen diesem und dem Werkzeug eine Homogenisierstrecke angeordnet ist, bestehend aus einem das Extrudergehäuse (1) fortsetzenden Gehäuseteil (7) und zwei darin angeordneten, gegensinnig drehbaren Zellenrotoren (9), die an ihrem Umfang eine Anzahl offener Förderzellen (15) aufweisen, die durch parallel oder im Winkel zur Rotorachse verlaufende, radiale Zellenwände (17) voneinander getrennt sind, wobei die Zellenwände (17) des einen Rotors (9) berührungsfrei kämmend in die Förderzellen (15) des anderen Rotors eingreifen.

2. Extruder nach Anspruch 1, dadurch **gekennzeichnet,** daß die Schneckengänge der Extruderschnekken (3) im axialen Abstand vor der Vorderkante (21) der Zellenwände (17) enden derart, daß den Zellenwänden (17) ein freier Ringraum (10) vorgelagert ist.

3. Extruder nach einem der Ansprüche 1 bis 2, dadurch **gekennzeichnet,** daß jeder Zellenrotor (9) auf seinem Umfang fünf, sechs oder sieben Förderzellen aufweist.

4. Extruder nach einem der Ansprüche 1 bis 3, dadurch **gekennzeichnet,** daß jede Förderzelle (15) ein bogenförmig gerundetes Profil aufweist.

5. Extruder nach Anspruch 4, dadurch **gekennzeichnet,** daß das Profil im wesentlichen ein Kreisbogen ist, dessen Radius das 0,18- bis 0,3-fache des Außendurchmessers ($D_A$) des Rotors beträgt.

6. Extruder nach einem der Ansprüche 1 bis 5, dadurch **gekennzeichnet,** daß zumindest die anströmseitigen Stirnseiten (21) der Zellenwände (17) schneidenartig zugespitzt verlaufen.

7. Extruder nach einem der Ansprüche 1 bis 6, dadurch **gekennzeichnet,** daß die Zellenwände (17) über ihre axiale Länge eine oder mehrere Unterbrechungen aufweisen.

8. Extruder nach Anspruch 7, dadurch **gekennzeichnet,** daß die Unterbrechungen benachbarter Zellenwände (17) in gleichen radialen Ebenen liegen derart, daß im Bereich der Unterbrechungen von Zellenwänden freie Ringräume (19, 19') gebildet werden.

9. Extruder nach Anspruch 7, dadurch **gekennzeichnet,** daß die Unterbrechungen benachbarter Zellenwände (17) in Achsrichtung gegeneinander versetzt sind.

10. Extruder nach Anspruch 9, dadurch **gekennzeichnet,** daß die Längsmitten der Unterbrechungen auf einer Schraubenlinie liegen.

11. Extruder nach einem der Ansprüche 1 bis 7, dadurch **gekennzeichnet,** daß die axiale Länge jeder Unterbrechung gleich oder kleiner ist als die Länge der angrenzenden Abschnitte der Zellenwände (17) und vorzugsweise 1/2 bis 1/4 der Länge dieser Abschnitte beträgt.

12. Extruder nach einem der Ansprüche 1 bis 11, dadurch **gekennzeichnet,** daß die axiale Länge der Abschnitte der Zellenwände das 0,2 bis 0,4-fache und die axiale Länge der Unterbrechungen das 0,1 bis 0,3-fache des Außendurchmessers (D) des Rotors beträgt.

13. Extruder nach einem der Ansprüche 1 bis 12, dadurch **gekennzeichnet,** daß die Zellenwände im Winkel von 10 - 40° zur Axialrichtung verlaufen.

14. Extruder nach einem der Ansprüche 1 bis 13, dadurch **gekennzeichnet,** daß die Homogenisierstrecke als integraler Teil des Extruders (1, 3) ausgebildet ist.

15. Extruder nach Anspruch 1 bis 13, dadurch **gekennzeichnet,** daß die Homogenisierstrecke als eine an den Extruder (1, 3) ansetzbare Einheit ausgebildet ist, wobei die Zellenrotoren (9) und die Extruderschnecken (3) mit zusammenpassenden Kupplungsmitteln (14) versehen sind.

Fig.1

3  11  15 17  9  19'  →II

III↑  III↑

13

III↑

1  3  9  19  17  19'  →II  17

21  17'  15

EP 0 346 757 A2

Fig. 2

Fig. 3

Fig. 4

Krauss-Maffei AG
8000 München 50
TK 289 a

Fig5

15 19' 17

13

19 17 9 7 19' 17 15

19

EP 0 346 757 A2

Krauss-Maffei AG
8000 München 50
TK 289 a

1

3

Fig. 6

25

15

17

9

7

Krauss—Maffei AG
8000 München   50
TK 289 a

Fig. 7

15  17  19'

13

1  3  17  7  19'  17  15

19

Krauss-Maffei AG
8000 München 50
TK 289 a

EP 0 346 757 A2